# EUROPÄISCHE PATENTANMELDUNG

(11) **EP 0 875 425 A2**
(43) Veröffentlichungstag der Anmeldung: **04.11.1998**
(21) Anmeldenummer: 98107457.8
(22) Anmeldetag: 23.04.1998
(51) Int. Cl.: B60R 21/20

(54) **Umhüllung für Beifahrer-Airbag-Modul**

(30) Priorität: 30.04.1997 DE 19718211
(71) Anmelder: TRW Automotive Safety Systems GmbH, 63743 Aschaffenburg (DE)
(72) Erfinder: Bathon, Michael, 63811 Stockstadt (DE); Fäth, Stefan, 64743 Aschaffenburg (DE); Bohn, Stefan, 63773 Goldbach (DE)
(74) Vertreter: Degwert, Hartmut, Dipl.-Phys.

(57) **Zusammenfassung**

Für ein Beifahrer-Airbag-Modul mit einem in Form eines rohrförmigen Behälters, einem den Behälter umschließenden Diffusorrohr sowie einem zusammengefalteten Luftkissen wird eine Umhüllung vorgeschlagen, die dadurch gekennzeichnet ist, daß sie aus einem Abschnitt eines an die Querschnittsform des Moduls angepaßten, extrudierten, längsseitig offenen Kunststoffprofils (1) besteht, bei dem die einander gegenüberliegenden Längskanten (2, 3) nach dem Einlegen der Modulteile miteinander verbindbar ausgebildet sind.

## Beschreibung

Die Erfindung betrifft eine Umhüllung für ein Beifahrer-Airbag-Modul mit einem Gaserzeuger in Form eines rohrförmigen Behälters, einem den Behälter umschließenden Diffusorrohr sowie einem zusammengefalteten Luftkissen.

Derartige Umhüllungen erfüllen verschiedene Funktionen und können daher sehr unterschiedlich gestaltet sein. Anfangs, als Beifahrer-Airbag-Module nicht oder allenfalls als Zusatzausstattung vorgesehen waren, harten die Umhüllungen mehr den Charakter eines alles umschließenden Gehäuses, das insbesondere im Hinblick auf die Befestigung des Moduls im Kraftfahrzeug und die beim schlagartigen Aufblasen des Luftkissens auftretenden dynamischen Kräfte ausgelegt war. Diese Gehäuse waren verhältnismäßig kompliziert, schwer und aufwendig in der Herstellung.

Mit der zunehmenden Verwendung von Airbag-Systemen auch für die Beifahrerseite von Kraftfahrzeugen hat man dann immer Wert auch auf die Gewichtseinsparung, die preisgünstige Herstellung und Standardisierung solcher Umhüllungen gelegt, wobei wegen der bei nahezu allen modernen Großserienfahrzeugen üblichen Ausbildung von entsprechend angepaßten Einbaubereichen in der Karosserie die 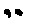 Gehäusefunktion" in den Hintergrund getreten ist, weil der Einbauraum in der Karosserie diese Funktion mehr und mehr übernommen hat und es insoweit hauptsächlich nur noch darauf ankommt, das Beifahrer-Airbag-Modul für den Transport, die Lagerung und beim Einbau in das Kraftfahrzeug zu schützen.

Zu diesem Zweck sind schon Gehäuse aus Kunststoff vorgeschlagen worden, die als Formteil zwar leicht den Einbauverhältnissen angepaßt werden können aber dadurch oft eine komplizierte Form mit unterschiedlichen Wanddicken aufweist, was nur mit aufwendigen Werkzeugen und entsprechend hohem Werkzeugkostenanteil realisierbar ist.

Aus dem Bestreben, Umhüllungen für den eingangs genannten Zweck weiter zu verbessern, d.h. ohne Einbuße an Funktionssicherheit preisgünstiger herstellen zu können, ergibt sich die Aufgabe, eine Umhüllung vorzuschlagen, die eine vielseitig verwendbare Grundform aufweist, die möglichst wenige Bauteile umfaßt und die einfach zu handhaben und zu montieren ist. Insbesondere soll die Herstellung deutlich verbilligt werden.

Zur Lösung dieser Aufgabe wird erfindungsgemäß eine Umhüllung der eingangs genannten Art vorgeschlagen, die dadurch gekennzeichnet ist, daß sie aus einem Abschnitt eines an die Querschnittsform des Moduls angepaßten, extrudierten, längsseitig offenen Kunststoffprofils besteht, bei dem die einander gegenüberliegenden Längskanten nach dem Einlegen der Modulteile miteinander verbindbar ausgebildet sind.

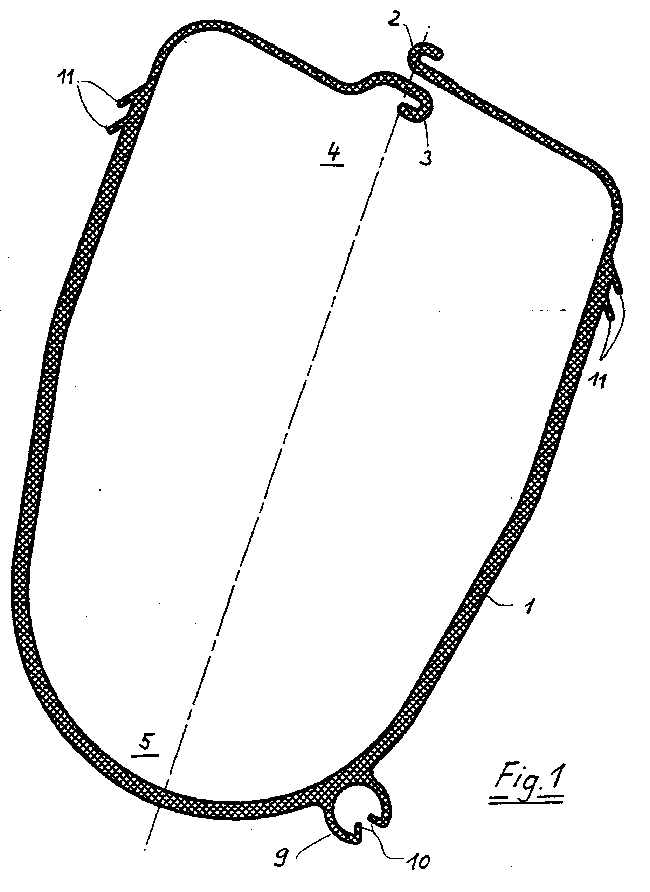

Damit ist eine Umhüllung geschaffen, die mit einem einzigen Strangpreßwerkzeug in praktisch unbegrenzter Länge herstellbar ist, die durch einfaches Abtrennen in Abschnitte vorgegebener Länge an unterschiedliche Einbauverhältnisse und Vorgaben angepaßt werden kann und die beim Zusammenbau denkbar einfach verschlossen werden kann. Es wird demnach eine äußerst preisgünstige, leichte und für verschiedene Querschnittfsformen auslegbare Umhüllung bereitgestellt. Vorteilhafte Ausgestaltungen des Erfindungsgedankens sind in den Unteransprüchen 2 - 14 beschrieben. Weitere Einzelheiten werden anhand der in Figuren 1 - 5 dargestellten Ausführungsbeispiele näher erläutert. Es zeigen
- Fig. 1: eine erste Ausführungsform der erfindungsgemäßen Umhüllung im Schnitt.
- Fig. 2: Eine zweite Ausführungsform der Umhüllung im Schnitt.
- Fig. 3: Eine dritte Ausführungsform der Umhüllung im Schnitt.
- Fig. 4: Im Ausschnitt eine Abwandlung der Ausführungsform gemäß Fig. 3 und
- Fig. 5: eine Einbausituation für die erfindungsgemäße Umhüllung im Schnitt.

Bei dem Ausführungsbeispiel gemäß Fig. 1 hat das Kunststoffprofil 1 eine U-förmig nach außen abgebogene Längskante 2 und eine gegensinnig nach innen abgebogene Längskante 3 an der Austrittsseite 4 für das nicht dargestellte Luftkissen. Auf der der Austrittsseite 4 gegenüberliegenden Seite 5 hat das Kunststoffprofil 1 einen halbkreisförmigen Bodenbereich, der an das darin aufzunehmende, nicht dargestellte Diffusorrohr angepaßt ist. Die sich daran nach oben anschließenden Wandungsbereiche verlaufen zunächst leicht divergierend und im oberen Teil etwa parallel zueinander und ergeben insgesamt eine an die aufzunehmenden Bauteile angepaßte Querschnittsform. Die einstückig angeformten Deckelteile mit den Längskanten 2 und 3 sind von den Seitenwandbereichen mit einem Krümmungsradius etwa senkrecht abgewinkelt und mit geringerer Wanddicke ausgeführt, damit sie beim schlagartigen Öffnen des Luftkissens leicht nach außen abgebogen werden können. Das Kunststoffprofil ist insgesamt so flexibel, daß die Längskanten 2 und 3 nach dem Einlegen der Modulteile leicht miteinander verhakt werden können. Außen ist am Kunststoffprofil 1 noch ein einstückig angeformter, offener Kanal 9 für die Aufnahme eines elektrischen Kabels vorgesehen, wobei nach innen abgewinkelte Längskanten 10 dafür sorgen, daß das Kabel nach dem Einlegen im Kanal 9 gehalten wird. Ferner sind im oberen Bereich des Kunststoffprofils 1 außen noch je zwei nach unten weisende Längsstege 11 vorgesehen, die für eine elastische Abstützung des Beifahrer-Airbag-Moduls im Einbauraum sorgen, so daß im Fahrbetrieb unvermeidbare Schwingungen und Relativbewegungen zwischen Kunststoffprofil 1 und Einbauumgebung nicht mit Klappergeräuschen verbunden sind.

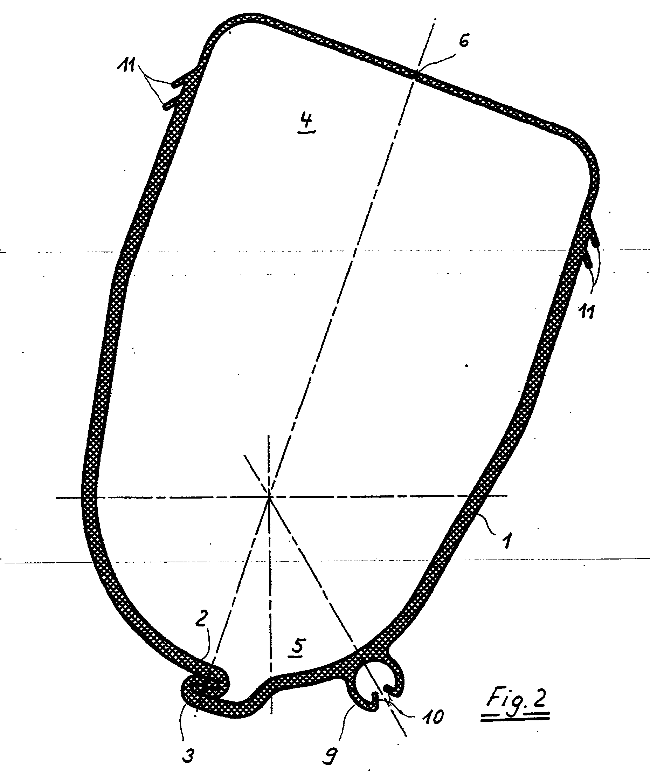

Bei der Ausführungsform gemäß Fig. 2 sind die miteinander verhakbaren Längskanten 2, 3 nicht an der Austrittsseite 4, sondern an der gegenüberliegenden Seite 5 des Kunststoffprofils 1 ausgebildet. An der Austrittsseite 4 ist das Kunststoffprofil 1 geschlossen, weist jedoch eine durchgehende Sollbruchlinie 6 auf, längs derer das Kunststoffprofil 1 beim schlagartigen Aufblasen des Luftkissens aufreißt. Längsnaht und Sollbruchlinie sind in der Symmetrieachse des Kunststoffprofils 1 angeordnet. Der außen angeformte Kanal 9 mit nach innen abgewinkelten Längskanten 10 sowie die nach unten weisenden Längsstege 11 sind wie beim Ausführungsbeispiel gemäß Fig. 1 ausgeführt.

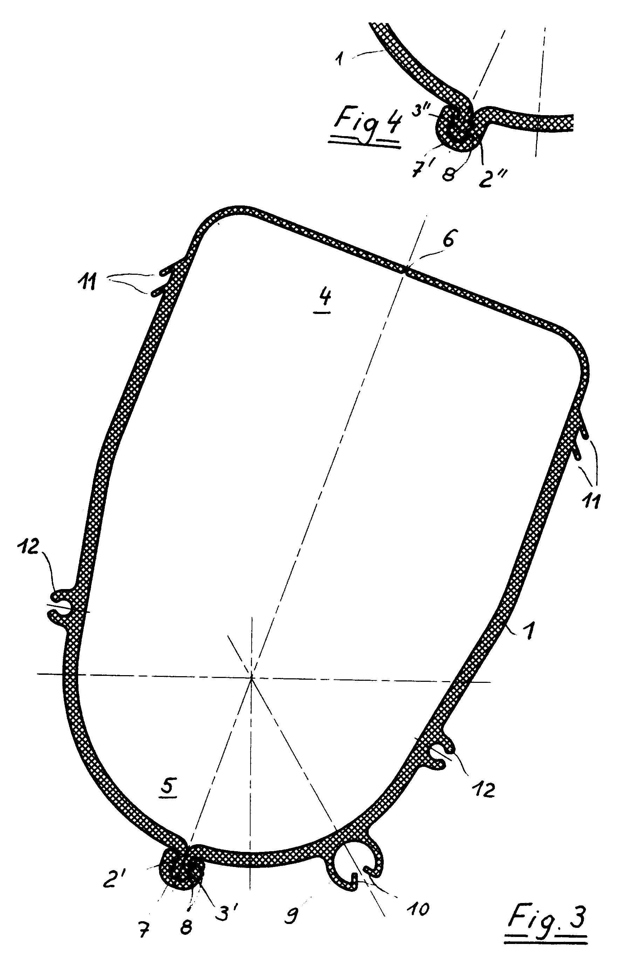

Das gilt auch für die Ausführungsform gemäß Fig. 3, bei der außenseitig am Kunststoffprofil 1 noch einstückig angeformte Eingriffsnuten 12 vorgesehen sind, in denen Befestigungsmittel angeordnet werden können. Auf der Austrittsseite 4 ist das Kunststoffprofil 1 wiederum mit einer Sollbruchlinie 6 versehen. Auf der gegenüberliegenden Seite 5 sind nach außen abgewinkelte Längskanten 2', 3' mit Hinterschneidungen 8 vorgesehen, auf die ein Schließprofil 7 aufgesteckt oder aufgeschoben werden kann. Dieses Schließprofil muß sich nicht unbedingt über die gesamte Länge des Kunststoffprofils 1 erstrecken; je nach Steifigkeit des Kunststoffprofils 1 und der Längskanten 2', 3' kann es genügen, wenn zwei oder mehr kurze Abschnitte des Schließprofils über die gesamte Länge verteilt angeordnet werden.

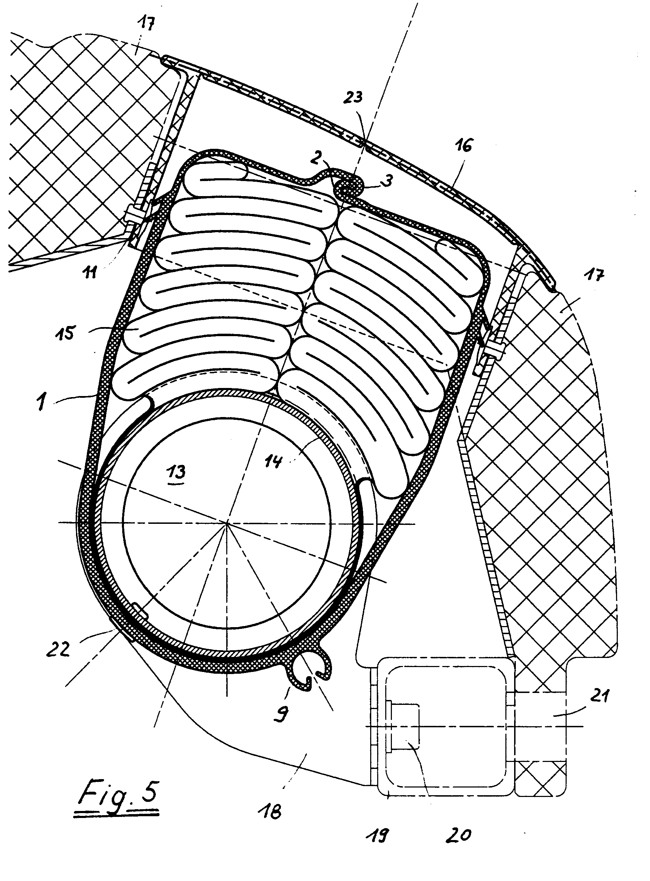

Fig. 4 zeigt noch eine Alternative zum Schließprofil 7 gemäß Fig. 3. In diesem Fall ist nur eine Längskante 3'' nach außen abgewinkelt und mit Hinterschneidungen 8 versehen, während das Schließprofil 7' als Teil der anderen Längskante 2' einstückig am Kunststoffprofil 1 angeformt ist. In diesem Fall erstreckt sich das Schließprofil 7' zwar zwangsläufig über die gesamte Länge des Beifahrer-Airbag-Moduls, hat aber den Vorteil, daß kein zweites, gesondertes Profil erforderlich ist und daß das Schließprofil 7' unverlierbar mit dem Kunststoffprofil 1 verbunden ist. Auch bei den Ausführungsformen gemäß Fig. 3 und 4 liegen Längsnaht und Sollbruchlinie 6 in der Symmetrieachse des Kunststoffprofils 1.

Bei der in Fig. 5 dargestellten Einbausituation ist eine Umhüllung gemäß Fig. 1 gezeigt, die den rohrförmigen Gaserzeuger 13, das Diffusorrohr 14 und das zusammengefaltete Luftkissen 15 umschließt und oben durch Verhaken der Längskanten 2, 3 geschlossen ist. Die Einbauöffnung im Armaturenbrett 17 ist durch eine Abdeckkappe 16 verschlossen, die eine Sollbruchlinie 23 aufweist und bei einem schlagartigen Aufblasen des Luftkissens 15 je etwa zur Hälfte nach außen aufklappt. Die Verhakung der Längskanten 2, 3 ist so ausgelegt, daß das Beifahrer-Airbag-Modul für Transportlagerung und während des Einbaus sicher geschlossen und geschützt ist, beim schlagartigen Aufblasen des Luftkissens 15 aber leicht zu öffnen ist. Die schräg nach unten weisenden Längsstege 11 ergeben eine beidseitige elastische Abstützung des Beifahrer-Airbag-Moduls in der Einbauöffnung des Armaturenbretts 17. Im übrigen ist das Beifahrer-Airbag-Modul durch endseitig am Gaserzeuger 13 bzw. Diffusorrohr 14 angebrachte Befestigungslaschen 18 mittels Schrauben 20 an einem Querträger 19 im Armaturenbrett 17 befestigt. Die Schrauben 20 sind durch Montageöffnungen 21 im Armaturenbrett 17 erreichbar. Im unteren Bereich des Kunststoffprofils 1 ist eine Schlaufe des Luftkissens 15 zwischen Diffusorrohr 14 und Umhüllung eingeklemmt. Zur Festlegung der bei der Montage erreichten Positionierung zwischen Diffusorrohr 14 und Kunststoffprofil 1 können endseitig noch zwei Niete 22 oder Schrauben vorgesehen werden.

## Patentansprüche

1. Umhüllung für ein Beifahrer-Airbag-Modul mit einem Gaserzeuger in Form eines rohrförmigen Behälters, einem den Behälter umschließenden Diffusorrohr sowie einem zusammengefalteten Luftkissen, dadurch gekennzeichnet, daß die Umhüllung aus einem Abschnitt eines an die Querschnittsform des Moduls angepaßten extrudierten, längsseitig offenen Kunststoffprofils (1) besteht, bei dem die einander gegenüberliegenden Längskanten (2, 3) nach dem Einlegen der Modulteile miteinander verbindbar ausgebildet sind.

2. Umhüllung nach Anspruch 1, dadurch gekennzeichnet, daß am Kunststoffprofil (1) gegensinnig abgebogene, im Querschnitt U-förmige Längskanten (2, 3) vorgesehen sind, die zur Ausbildung einer durchgehenden Längsnaht miteinander verhakt werden können.

3. Umhüllung nach Anspruch 2, dadurch gekennzeichnet, daß die im Querschnitt U-förmigen Längskanten (2, 3) auf der Austrittsseite (4) des Luftkissens am Kunststoffprofil (1) ausgebildet sind.

4. Umhüllung nach Anspruch 2, dadurch gekennzeichnet, daß die im Querschnitt U-förmigen Längskanten (2, 3) auf der der Austrittsseite (4) des Luftkissens gegenüberliegenden Seite (5) am Kunststoffprofil (1) ausgebildet sind und daß auf der Austrittsseite (4) eine Sollbruchlinie (6) im Kunststoffprofil (1) vorgesehen ist.

5. Umhüllung nach Anspruch 3 oder 4, dadurch gekennzeichnet, daß die U-förmigen Längskanten (2, 3) etwa in der Symmetrieebene des Kunststoffprofils (1) vorgesehen sind.

6. Umhüllung nach Anspruch 1, dadurch gekennzeichnet, daß am Kunststoffprofil (1) einander gegenüberliegende, winklig nach außen vorstehende Längskanten (2', 3') ausgebildet sind, die mittels eines oder mehrerer Abschnitte eines angepaßten Schließprofils (7) miteinander verbindbar sind, und daß auf der Austrittsseite (4) des Luftkissens eine Sollbruchlinie (6) im Kunststoffprofil (1) vorgesehen ist.

7. Umhüllung nach Anspruch 6, dadurch gekennzeichnet, daß die nach außen vorstehenden Längskanten (2', 3') eine oder mehrere Hinterschneidungen (8) für den Eingriff des angepaßten Schließprofils (7) aufweisen.

8. Umhüllung nach Anspruch 6 oder 7, dadurch gekennzeichnet, daß die Längskanten (2', 3') wie in den Ansprüchen 3 bis 5 am Kunststoffprofil (1) angeordnet sind.

9. Umhüllung nach einem der Ansprüche 6 bis 8, dadurch gekennzeichnet, daß das Schließprofil (7') einstückig mit einer der offenen Längskanten (2'') ausgebildet ist.

10. Umhüllung nach einem der Ansprüche 1 bis 9, dadurch gekennzeichnet, daß das Kunststoffprofil (1) außen einen einstückig angeformten, offenen Kanal (9) für die Aufnahme eines elektrischen Kabels aufweist.

11. Umhüllung nach Anspruch 10, dadurch gekennzeichnet, daß am Kanal (9) nach innen abgewinkelte Längskanten (10) vorgesehen sind.

12. Umhüllung nach einem der Ansprüche 1 bis 11, dadurch gekennzeichnet, daß am Kunststoffprofil (1) außen ein oder mehrere einstückig angeformte, schräg abstehende Längsstege (11) vorgesehen sind.

13. Umhüllung nach Anspruch 12, dadurch gekennzeichnet, daß im oberen Seitenwandbereich auf beiden Seiten des Kunststoffprofils (1) je zwei schräg nach unten weisende Längsstege (11) vorgesehen sind.

14. Umhüllung nach einem der Ansprüche 1 bis 13, dadurch gekennzeichnet, daß außen am Kunststoffprofil (1) noch ein oder mehrere einstückig angeformte Eingriffsnuten (12) oder dergl. für Befestigungsmittel vorgesehen sind.
